# EUROPEAN PATENT SPECIFICATION

(11) **EP 4 352 754 B1**
(45) Date of publication and mention of the grant of the patent: **16.10.2024**
(21) Application number: 23735282.8
(22) Date of filing: 23.06.2023
(51) Int. Cl.: G21G 1/00, B01D 17/00, C22B 60/00

(54) **PURIFICATION OF TARGET MATERIAL FOR THE PRODUCTION OF RADIO-ISOTOPES**
REINIGUNG VON TARGETMATERIAL FÜR DIE PRODUKTION VON RADIOISOTOPEN
PURIFICATION D'UN MATÉRIAU CIBLE POUR LA PRODUCTION DE RADIO-ISOTOPES

(30) Priority: 23.06.2022 EP 22180762
(43) Date of publication of application: 17.04.2024
(73) Proprietor: SCK.CEN, 1160 Brussel (BE)
(72) Inventor: MAERTENS, Dominic, 2480 Dessel (BE); DE PEUTER, Jolan, 2490 Balen (BE)
(74) Representative: Winger
(86) International application number: PCT/EP2023/067202
(87) International publication number: WO 2023/247788

(56) References cited:
- WO-A1-2019/183724
- WO-A1-2020/148316
- US-A- 5 371 372
- US-A1- 2006 051 269

## Description

### Technical field of the invention

The present invention relates to the field of radio-isotopes. More specifically, the present invention relates to methods and systems for purification of irradiated targets for re-use in the production of radio-isotopes.

### Background of the invention

For the production of radio-isotopes, generally, solid targets are being used for their high yield in state-of-the-art systems, as for solid targets, a large density of a parent nuclide, from which the radio-isotopes are produced, may be easily achieved.

For liquid targets, there is the limited solubility of most parent nuclide compounds in water (typically used as the liquid solvent) at room temperature. For example, salts of Ra-226 (T_{1/2}: 1600 years), which may be used as basic chemicals for providing the parent nuclide for producing the radio-isotope Ra-225 (T_{1/2}: 14.8 days) that may decay to the radio-isotope Ac-225 (T_{1/2}: 10 days), have a limited solubility in water. By way of illustration, radium nitrate salt Ra(NO₃)₂ has a solubility of 13.9 g per 100 g of H₂O at 20°C. Nevertheless, recently, interest in liquid targets has been increased since methods have been found to overcome the limited solubility issue.

Both in the case of solid targets and liquid targets, separating the radio-isotopes from the target is required, which typically may be done in separation columns by solid phase extraction methods.

The worldwide available stock of target materials of some parent nuclides from which the radio-isotopes can be produced is limited. Especially in these cases, such as for e.g. in the case of Ra-226, but not limited thereto, it is useful to re-use target material.

The re-use of target material has been referred to in international patent application WO 2020/260210, where a method is described for the production of Actinium based on the photonuclear route of irradiating a Radium-226 liquid target and irradiating - after separation of the Actinium - the Radium-226 liquid target solution as such using a closed loop system.

Purification of actinium in the production process of actinium radio-isotopes has been described in international patent application WO2020/148316.

Further systems suitable for the purification of radioisotopes can be found in patent documents US2006051269 and US5371372.

Nevertheless, there is still a need for good purification methods and systems to be able to re-use target materials for further irradiations in the production of radio-isotopes.

### Summary of the invention

It is an object of the present invention to provide methods and systems for purifying irradiated targets for re-use in the production of radio-isotopes.

It is an advantage of embodiments of the present invention that these systems and methods provide an efficient way of re-using irradiated targets for e.g. generation of radio-isotopes.

It is an advantage of embodiments of the present invention that systems and methods are provided for re-using irradiated targets, independent whether these targets at the moment of irradiating were in solid or in liquid form.

It is an advantage of embodiments of the present invention that in the production of radio-isotopes, the target material can be re-used, allowing an increased production of radio-isotopes with a given amount of target material. It furthermore is to be noted that, for example, production of non-carrier added (NCA) Ac-225, formed by the decay of Ra-225, is not possible by the first Radium / Actinium separation step, as small amounts of Ac-227 (T_{1/2}: 21.8 years) are also formed in the photonuclear production route by neutron capture of the parent nuclide Ra-226. Therefore, for the example of Radium / Actinium based production, operation of a liquid radium target in a closed loop system is not desired when NCA Ac-225 is the main goal of the production process. After a first high-efficiency separation of Radium (224+225+226) isotopes from Actinium (225+227) isotopes, the radium must be stored for ingrowth of fresh Ac-225 by decay of Ra-225, which will finally result into NCA Ac-225 after the second Ra/Ac separation step. This consequently increases the amount of parent nuclide Ra-226 needed to produce Ac-225, and emphasis the importance of a good recycling strategy for Ra-226.

It is an advantage of embodiments of the present invention that due to the purification process provided, problems induced due to rinsing (e.g. dilution of the target) and uncertainties related to pH of the irradiated solution can be overcome so that re-use of the target material can be performed.

It is an advantage of embodiments of the present invention that inorganic and organic contaminations can be removed from the target material.

It is an advantage of embodiments of the present invention that these allow to obtain the minimum chemical purity required for the target material, e.g. Ra, to be recycled and irradiated again.

It is an advantage of embodiments of the present invention that the complexity induced by the purification process according to embodiments of the present invention is limited.

The above objective is accomplished by a method and apparatus according to the present invention.

The present invention relates in one aspect to a method for purification of a target material for re-use in the production of radio-isotopes, the method comprising
- obtaining a solution of irradiated target material, the solution thus comprising at least target material comprising Ra-226 and optionally also radio-isotopes Ra-225 and Ac-225 and optionally impurities,
   subsequently,
- adding an acid being HNOs in a predetermined quantity and concentration and providing conditions for quantitatively dissolving the target material and avoiding co-precipitation of the optionally present radio-isotopes and/or impurities,
- selectively removing H₂O from the solution by evaporation, leaving the acid predominantly inside the solution thereby allowing the target material to precipitate while the acid concentration in the solution increases and thereby reducing or avoiding co-precipitation of the optionally present radio-isotopes,
- after removal of the excess H₂O, lowering the temperature of the solution to maximise the precipitation of the target material and reduce the solubility of the target material in the remaining liquid,
- separating the liquid containing the optionally present radio-isotopes and/or impurities from the precipitated target material, and
- preparing the precipitated target material for re-use in the production of radio-isotopes.

The latter may for example be by re-irradiation for the production of radio-isotopes or may for example involve storage for ingrowth of new Ac-225. Evaporation may refer to selectively removing H₂O by bringing it in vapor phase. The evaporation may in some embodiments be distillation.

Lowering the temperature may comprise an active cooling step, but does not need to require an active cooling step. Lowering of the temperature refers to the fact that the temperature at which evaporation is performed is higher than the temperature at which the separating of the liquid is performed.

It is an advantage of embodiments of the present invention that at least one concentrating step is performed, in embodiments of the present invention being performed by an evaporation process, e.g. a distillation process.

For example in case of production of Actinium-225 from a Radium-226 target material, on average Ac-225 is separated from Radium every two weeks. This facilitates a slow process as obtained with the evaporation, e.g. distillation, process, allowing to focus on minimizing Ra-226 losses and allowing quick processing of Ac-225 after separation.

The acid, e.g. HNOs, may be added in a concentration between 1% and 100%, e.g. in a range with as an upper limit for example 90%, e.g. 80%, e.g. 75% e.g. 70%, e.g. 69% and with a range having as a lower limit for example 10%, e.g. 25%, e.g. 40%. The acid may be HNOs, for example in the case of production of Ac-225 isotopes using Ra-226 target material. It is to be noted that the method may be used for recycling target material, even if separation between the target material and the radio-isotopes produced during the earlier irradiation is performed in a different manner. Although the target material is Ra-226, the method may also be used when Ra-225 and Ac-225 quantities are small or completely absent, and the process is mainly performed to obtain Ra-226 is a pure and concentrated form without presence of inorganic or organic impurities or large quantities of HNO₃.

It is to be noticed that the method of purification may be applied to target material that has been freshly irradiated or to target material that has been milked for a plurality of times.

Obtaining a solution comprising irradiated target material may comprise obtaining an irradiated solution of target material or obtaining a solution of irradiated target materials wherein the irradiated target material was irradiated when in solid form. It is an advantage of embodiments of the present invention that these provide purification methods that can be used both for solid irradiation targets as well as liquid irradiation targets.

Irradiation of the target material, either in liquid or solid form of the target material, may be by photons, neutrons, or charged particles, such as for example protons or deuterons. In advantageous embodiments, Radium-226 target material is irradiated by photons or neutrons, in liquid or solid form, for production of Actinium radio-isotopes through production of Radium-225.

Obtaining a solution of irradiated target material, may further comprise obtaining aqueous solutions or solids, e.g. rinsing materials used for rinsing the target capsule/container, rinsing materials used for rinsing the transfer tubing, side process streams containing smaller quantities of target materials and radio-isotopes or a mixture of those, in solid or liquid form, before, together or after transfer of the main target material.

According to the embodiments, the method may be mainly performed to obtain Ra-226 in a pure and concentrated form without presence of impurities or large quantities of HNOs.

The irradiated target material comprises Ra-226 and optionally Ra-225 and Ac-225, wherein the acid is HNOs and wherein the HNOs is present in a concentration between 65% and 68% when precipitation of Radium is performed. It is an advantage of embodiments of the present invention that by using a concentration between 65% and 68% for the precipitation, it can be avoided that an increased amount of H₂O needs to be removed in the consecutive evaporation process, which often is the case when adding lower concentrations, or it can be avoided that there is an increased presence of corrosive vapours (HNOs, NOX), which often is the case when adding higher concentrations.

One or more of the method steps may be performed at reduced pressure, i.e. a pressure below atmospheric pressure. The reduced pressure may be an operational pressure in the range 50 mbar to 200 mbar. The latter may allow selectively capturing of volatile isotopes and/or reducing the spreading of corrosive fumes. Reducing the pressure may advantageously result in reducing the boiling point of the solution.

Heating or cooling of the solution may be performed using a circulating liquid in a double wall of a double walled (jacketed) reactor vessel.

The method may comprise visually following-up the process using a transparent reactor vessel.

The solution for heating/cooling may be predominantly H₂O.

The method may furthermore comprise stirring the solution, e.g. using magnetic stirring. It is an advantage of embodiments of the present invention that stirring may improve the evaporation or boiling process during the evaporation process, e.g. the distilling.

The method may be applied in a rotary evaporator system. It is an advantage of embodiments of the present invention that the surface for evaporation is actively increased, thus improving the efficiency of the process.

The method may be applied in a closed circuit that is heated and/or cooled through a heat-exchanger. It is an advantage of embodiments of the present that by using a closed circuit, target material can be recovered from the liquid in case of breaking of a double wall when the double wall reactor vessel is used.

After removal of the excess H₂O, the temperature may be lowered below room temperature but above the freezing temperature of the liquid.

The solution may be filtered using an immersion filter connected to a filtrate collection vessel, optionally a buffer vessel, and a vacuum pump.

Preparing the precipitated target material may comprise washing the precipitate with a concentrated acid after initial filtration, and optionally repeating the filtration process. By washing the precipitate with an acid after initial filtration and optionally repeating the filtration process, the recovery of radio-isotopes may be improved while minimising dissolution of the target material.

After the final filtration, the target material precipitate may be dried to remove residual acid and the solubility of the target material in H₂O may thus be further improved.

H₂O may be added for recovering the target material, thereby fully dissolving the target material.

In some embodiments, the solution may be heated to clean the reactor vessel in which the process is performed by condensation and dissolution of residual target material solids.

The solution may be refluxed.

In one aspect, the present invention also relates to a system for the purification of a target material, the system comprising
a reactor vessel,
an inlet for a solution of irradiated target material,
an inlet for adding acid
the reactor vessel comprising an evaporation equipment, such as for example a distillation equipment, for removing H₂O from the solution of irradiated target material leaving the acid predominantly inside the solution thereby allowing the target material to precipitate while the acid concentration in the solution increases and thereby reducing or avoiding co-precipitation of the optionally present radio-isotopes, and
the system furthermore comprising a filtering means for separating the liquid containing the optionally present radio-isotopes from the precipitated target material.

The irradiated target material comprises Ra-226 and optionally Ra-225 and Ac-225. The inlet for acid is an inlet for HNOs.

The system may comprise a heating/cooling system for controlling the temperature of the reactor vessel by heating and/or cooling. The heating/cooling system may be a double wall heating/cooling jacket. The heating/cooling system may connect a heating/cooling jacket with a primary fluid circuit with a liquid circulation pumping system.

The system may comprise an air pumping system for inducing a reduced pressure in the reactor vessel.

The system may comprise a pressure sensor for measuring a pressure in the reactor vessel.

The system furthermore may comprise a controller for controlling the system, such as for example the air pumping system, the heating/cooling system and a system for controlling the amount of acid added, for performing a method as described above.

The system furthermore may comprise a Radon removal apparatus for removing Radon.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

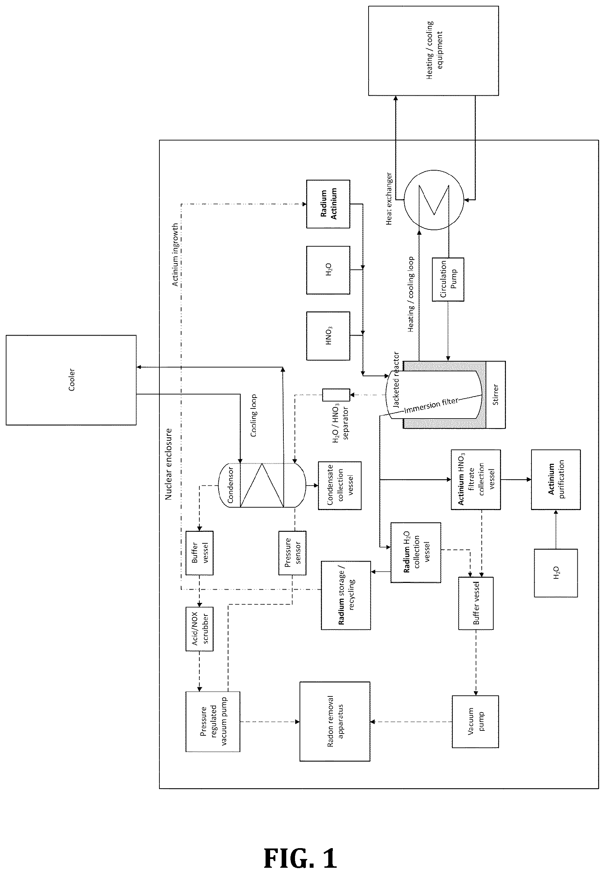

Fig. 1 illustrates a system for purification of a target material, according to an embodiment of the present invention.

### Description of illustrative embodiments

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. The dimensions and the relative dimensions do not correspond to actual reductions to practice of the invention. Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a method for purification of a target material for re-use in the production of radio-isotopes. The method further may be applied in the framework of the production of radio-isotopes, and consequently, the present invention also relates to a method for producing radio-isotopes, making use of purification of the target material and re-using the target material in the production of radio-isotopes.

The method for purification of a target material comprises obtaining a solution of irradiated target material, the solution thus comprising at least target material and optionally also radio-isotopes and optionally impurities. Obtaining a solution of irradiated target material may comprise obtaining a liquid target that has been irradiated or obtaining a solution that is obtained by dissolving irradiated target material that was irradiated in solid form. In some embodiments, the solution may be a Ra-225 and Ra-226 solution that is stored before an Ac-225 purification process. Such a solution may be stored for e.g. two weeks first. The method also comprises, subsequently, adding an acid in a predetermined quantity and concentration may be adding under predetermined temperature conditions for quantitatively dissolving the target material and avoiding co-precipitation of the optionally present radio-isotopes. The temperature at which the acid is added as well as the quantity and concentration of the acid may thus be selected so that no or substantially no co-precipitation of radio-isotopes and impurities occurs. Alternatively, during or after adding, conditions may be selected so as to quantitatively dissolve or re-dissolve the target material and avoid or remove co-precipitation of the optionally present radio-isotopes. The method also comprises selectively removing H₂O from the solution by evaporation such as for example distillation, leaving the acid predominantly inside the solution thereby allowing the target material to precipitate while the acid concentration in the solution increases and thereby reducing or avoiding co-precipitation of the optionally present radio-isotopes. The method also comprises, after removal of the excess H₂O, lowering the temperature of the solution to maximise the precipitation of the target material and reduce the solubility of the target material in the remaining liquid. This has the particular advantage that amount of Ra material introduced into the Actinium Purification step is reduced, and less Ra needs to be recovered from this process side stream. Lowering the temperature may include an active cooling step, although it is not required that such cooling is active.

The method furthermore comprises separating the liquid containing the optionally present radio-isotopes and impurities from the precipitated target material, and preparing the precipitated target material for re-use in the production of radio-isotopes. The method may comprise re-irradiation for the production of radio-isotopes and/or storing for new ingrowth of Ac-225 from Ra-225.

By way of illustration, embodiments of the present invention not being limited thereto, further standard and optional features will be illustrated below in exemplary methods and embodiments.

In a first exemplary method, a method for purifying a Radium target material after irradiation for the production of Actinium is described. The process is started by transferring a liquid target solution having a pH between 1 and 3 and containing Ra-226, Ra-225, Ac-225 and impurities into a precipitation vessel. The rinsing solutions are transferred afterwards, and by maximizing the performance of the rinsing process, it guarantees a (near) quantitative transfer of Ra-226 towards the precipitation vessel. The liquid target solution may be an irradiated liquid target or may stem from a solid irradiated target dissolved in a solvent to obtain a liquid target solution. The Ra solution is now diluted well below the maximum solubility point. Next, acid such as for example concentrated HNOs, e.g. between 25-50 ml concentrated HNOs (68%) is added, preferably in the molar quantity in which Ac is preferably separated in the filtration process. At this point, some Ra precipitation is likely to occur, as HNOs concentration can be increased to 1 - 3 M HNOs after this addition. However, upon starting the evaporation, e.g. distillation process, all Ra is again dissolved by increase of temperature, therefore excluding the chance of co-precipitation of Ac-225/Ac-227 and impurities upon the addition of the concentrated HNO₃. Alternatively, even excess H₂O can still be added to come to the point that all Ra-226 is dissolved after addition of the concentrated HNO₃. In other words, conditions are provided for quantitatively dissolving the target material and avoid co-precipitation of the optionally present radio-isotopes. Next, H₂O is being stripped from the solution by evaporation, e.g. distillation at elevated temperature and reduced pressure, and collected in the distillate collection flask. When during evaporation, e.g. distillation, the HNOs concentration rises, and the volume is reducing, more and more Ra(NO₃)₂ crystals are formed. However by this slow and controlled formation and growth of crystals during evaporation e.g. distillation, temperature variations inside the liquid, the inclusion of Ac by co-precipitation is effectively avoided.

When the evaporation process, e.g. distillation process, is completed, the reduced pressure is removed, the boiling process stops immediately, and the liquid should now be cooled down to a minimum. The heating jacked should be cooled from 70-80°C to e.g. 5°C. This will minimize the residual solubility of Ra in the concentrated HNOs.

After full cool-down, a filter dip tube is inserted in the reactor, and the filter is directed to the bottom of the round bottom reactor vessel. The filter dip tube is connected to a collection vessel for the Actinium fraction, a small buffer vessel, and a vacuum pump connected to the Rn trapping system. The filtration process is performed.

25-50 ml cold concentrated HNOs (68%) is added into the reactor with the filter dip tube still in position, and this additional volume is again removed towards the Actinium collection vessel. This process is focused on removing all Ac from the Ra, while minimizing the additional dissolution of Ra, and can be repeated several times while keeping volumes to a minimum. After a quantitative transfer of Ac from the Ra, the filter dip tube is removed, and washed with H₂O to remove all present Ra from it.

These washing solutions can be for example the recycled distillate (low in HNOs) or fresh H₂O. The main focus is to minimize the additional transfer of Ra towards the Ac in concentrated HNOs, as Ra-226 is more difficult to recover from this side-stream. The distillate can now be used to dilute the concentrated HNOs containing the Ac to the proper conditions for DGA Ra/Ac separation, which is typically 2 - 4 M HNO₃.

After removal of the filter dip tube, the evaporation process is again started to remove any residual traces of concentrated HNOs in the reactor, and the H₂O/HNO₃ separator. By removal of the last quantities of HNOs, the Ra solubility is maximized, and a minimum of acid is potentially transferred to the irradiation liquid target system.

Fresh H₂O, 120-200 ml is added to the reactor vessel, and the evaporation, e.g. distillation process is again started by heating of the jacket, and applying of reduced pressure. This process effectively cleans the walls from any residual Ra-226 by the refluxing of H₂O. Next, the process is stopped and the liquid is removed using a dip tube. Fresh H₂O can be added to the reactor, the process repeated, until the reactor is effectively purified from any residual Ra-226. Depending if the Ra-226+Ra-225 is being sent to a decay storage vessel for two weeks of ingrowth of Ac-225, or back towards the irradiation process, the rinsings are being added to the main Ra solution or not. In the first case, the rinse solution can be added to the Ra batch that will be milked for a final time before sending back towards irradiation. This strategy closes the loop for Ra-226 in this precipitation reactor.

The volume in the decay tank is comparable to the volume of the liquid target + rinsing. By doing this, the process will not discriminate between a freshly irradiated target, and a consecutive milking, further simplifying the process.

In order to successfully re-use target materials, such as for example Ra, a minimum amount of chemical purity is required. Therefore, the processes used in methods for producing isotopes from target material by re-using target material should avoid or minimise the introduction of organics or leached extractants. Methods for purifying according to embodiments of the present invention, advantageously assist in reducing impurities. Such impurities include for example fission products such as for example photo-fission process products, products stemming from the target materials (such as for example in the case of Radium the occurrence of stable and/or radio-active Pb, and Po-210), leaching products, such as products stemming from encapsulation materials like Ti, Fe, Ni, Cr, Zr, Nb, or Si, Al, Na, B stemming from quartz or borosilicate, etc., activation products, etc.

In some exemplary embodiments, the reactor vessel is operated in reduced pressure. The reduced pressure may for example be in the range 50 mbar to 200 mbar, for example in the range 100 mbar to 200 mbar. In this way, leaks of acid fumes and radon (Rn-220, Rn-222), from the vessel into the hot cell containment can be avoided. Radon can be filtered and captured on a low flow rate. Leakage of acid fumes and Radon can alternatively or additionally be reduced using moisture trap columns, Ag-ETS10 columns, or by using a decay tank. In one embodiment, the decay tank may for example have a volume of 100 liter, pressurized to e.g. maximum 10 bar. Operating the reactor vessel at a pressure of 100 mbar to 200 mbar, lowers the boiling point of the liquid to a temperature in a range of 50°C to 70°C. In some embodiments, a pressure sensor is installed between the condenser and the distillate collection vessel. A similar setup as for example known from a rotary evaporator system may be used. It is an advantage of embodiments of the present invention that the equipment used is radiation resistant and therefore adds little to no complexity to the system. It is an advantage of embodiments of the present invention that pressure and pressure differences can be easily measured in the system, e.g. hot cell.

In some exemplary embodiments, temperature for controlling evaporation, i.e. distillation, can be controlled using a liquid based heating/cooling system. It is an advantage of embodiments of the present invention that no electric heating equipment is required in direct contact with the reactor vessel. The liquid based heating/cooling system may for example be a double wall heating/cooling system, e.g. a double wall heating/cooling jacket. Such a double wall heating/cooling system may for example be based on water. Since a double wall heating system can be operated at e.g. 80°C, the system advantageously can be used when operating the reactor vessel in reduced pressure, since the boiling temperature of the liquid typically is reduced to a temperature in the range 50°C to 70°C and thus temperature control with water is perfectly possible. Since a double wall heating/cooling jacket with water can be for example operated at 80°C, the above conditions advantageously may provide a significant temperature difference, such that the evaporation process may be controlled and/or speeded up.

The double wall heating/cooling system may be connected with a primary liquid circuit with a circulation pump. It is an advantage of embodiments of the present invention that in the case of use of water and in the case of a failing double wall heating system, Radium will dilute in water but this would allow easier recuperation (e.g. compared to heating/cooling with silicon oil).

It is an advantage of some embodiments that no electrical heating jacket and thermocouples are required for controlling evaporation e.g. distillation for precipitation. Since using an electrical heating jacket as well as using thermocouples adds complexity to the isotope production system and/or target material purification system, the possibility of avoiding electrical heating jackets and/or thermocouples makes such systems more easy to control/use.

It is an advantage of embodiments of the present invention that they can make use of forced cooling, e.g. before filtration, to lower the residual Ra-226 target material concentration, and/or to speed up the process of cool-down after evaporation e.g. distillation.

It is an advantage of embodiments of the present invention that post-precipitation of Ra-226 can be avoided by filtering the liquid containing Ac-225 at a temperature lower than room temperature.

In embodiments according to the present invention, a stirring device may be used to perform a stirring action in the reactor vessel, e.g. at the bottom of the reactor vessel. In one embodiment, such a stirring device may be a magnetic stirrer. The magnetic stirrer may in one embodiment be an oval type stirrer, e.g. coated in borosilicate instead of PTFE. The stirrer can advantageously be used in a round bottom reactor vessel, although embodiments are not limited thereto. By using a stirring device, the bubble size of the boiling process - which can be violent at lower pressure - can be reduced and the formation of gas can be centralized in the middle of the reactor.

According to embodiments of the present invention, the parameters of the evaporation, e.g. distillation, are tuned to a point that HNOs remains almost entirely in the solution, and the evaporation process slows down a lot when an azeotrope of concentrated HNOs is reached. This increases safety and reduces the chance to unwantedly evaporate the liquid to dryness. In some embodiments, a Vigreux type column between reactor vessel and distillation bridge is efficient at separation of HNOs from H₂O, and the maximum practical concentration of 68% HNOs can be relatively easy reached. Above this azeotrope point, brown NOX fumes are typically observed in the solution, which is to be avoided. The distillate remains relatively free from HNOs unless pressure is strongly reduced.

In a second aspect, the present invention relates to a system for the purification of a target material. The system comprises a reactor vessel, an inlet for a solution of irradiated target material, and an inlet for adding an acid. The reactor vessel comprises evaporation equipment, e.g. distillation equipment, for removing H₂O from the solution of irradiated target material leaving the HNO₃, predominantly inside the solution thereby allowing the target material to precipitate while the acid concentration in the solution increases and thereby reducing or avoiding co-precipitation of the optionally present radio-isotopes and impurities. It furthermore comprises a filtering means for separating the liquid containing the optionally present radio-isotopes from the precipitated target material. The system also may comprise an inlet for adding a solvent, e.g. H₂O. The system also may comprise a heating/cooling system for controlling the temperature of the reactor vessel by heating and/or cooling. The heating/cooling system may be a double wall heating/cooling jacket. The system also may comprise a pumping system for inducing a reduced pressure in the reactor vessel. The system furthermore may comprise a pressure sensor for sensing a pressure in the reactor vessel. According to some embodiments, the system also may comprises a controller for controlling the system for performing a method as described in the first aspect. The system also may comprise a Radon removal apparatus for removing Radon. Further features and components may be provided, performing the functionalities as described in the first aspect of the present invention. By way of illustration, embodiments of the present invention not being limited thereto, the different components may be as shown in FIG. 1. In a further aspect, the present invention also relates to the use of a method of purification according to the first aspect for producing a target material that can be re-used again for irradiation for the production of radio-isotopes.

## Claims

1. - A method for purification of a target material for re-use in the production of radio-isotopes, the method comprising
- obtaining a solution of irradiated target material, the solution thus comprising at least target material and optionally also radio-isotopes and optionally impurities,
subsequently,
- adding an acid in a predetermined quantity and concentration and providing conditions for quantitatively dissolving the target material and avoiding co-precipitation of the optionally present radio-isotopes,
- selectively removing H₂O from the solution by evaporation, leaving the acid predominantly inside the solution thereby allowing the target material to precipitate while the acid concentration in the solution increases and thereby reducing or avoiding co-precipitation of the optionally present radio-isotopes,
- after removal of the excess H₂O, lowering the temperature of the solution to maximise the precipitation of the target material and reduce the solubility of the target material in the remaining liquid,
- separating the liquid containing the optionally present radio-isotopes from the precipitated target material, and
- preparing the precipitated target material for re-use in the production of radio-isotopes,
**characterised in that** the irradiated target material comprises Ra-226 and optionally Ra-225 and Ac-225 and that the acid is HNOs.

2. A method according to claim 1, wherein obtaining a solution comprising irradiated target material comprises obtaining an irradiated solution of target material or obtaining a solution of irradiated target materials wherein the irradiated target material was irradiated when in solid form.

3. A method according to any of the previous claims, wherein obtaining a solution of irradiated target material, further comprises obtaining aqueous solutions or solids, e.g. rinsing materials used for rinsing the target capsule/container, rinsing materials used for rinsing the transfer tubing, side process streams containing smaller quantities of target materials and radio-isotopes or a mixture of those, in solid or liquid form, before, together or after transfer of the main target material.

4. A method according to any of the previous claims, wherein the HNOs is present in a concentration between 65% and 68% when being added to the reactor vessel.

5. A method according to any of the previous claims, wherein one or more of the method steps are performed at a pressure lower than atmospheric pressure.

6. A method according to any of the previous claims, wherein heating or cooling of the solution is performed using a circulating liquid in a double wall of a double walled reactor vessel and/or the method is applied in a closed circuit that is heated and/or cooled through a heat-exchanger.

7. A method according to any of the previous claims, wherein the method comprises visually following up the process using a transparent reactor vessel.

8. A method according to any of the previous claims, wherein the method furthermore comprises stirring the solution, e.g. using magnetic stirring.

9. A method according to any of the previous claims, wherein the method is applied in a rotary evaporator system.

10. A method according to any of the previous claims, wherein after removal of the excess H₂O, the temperature is lowered below room temperature but above the freezing temperature of the liquid.

11. A method according to any of the previous claims, wherein the solution is filtered using an immersion filter connected to a filtrate collection vessel and a vacuum pump or optionally a buffer vessel.

12. A method according to any of the previous claims, wherein preparing the precipitated target material comprises washing the precipitate with an acid after initial filtration and optionally repeating the filtration process.

13. A target material purification system, the system comprising
a reactor vessel,
an inlet configured to introduce a solution of irradiated target material comprising Ra-226 and optionally Ra-225 and Ac-225,
an inlet configured to add at least HNOs acid, the reactor vessel comprising evaporation equipment for removing H₂O from the solution of irradiated target material leaving the acid predominantly inside the solution thereby allowing the target material to precipitate while the acid concentration in the solution increases and thereby reducing or avoiding co-precipitation of the optionally present radio-isotopes, and
a filtering means for separating the liquid containing the optionally present radio-isotopes from the precipitated target material.

14. A system according to claim 13, the system comprising one or more of a heating/cooling system for controlling the temperature of the reactor vessel by heating and/or cooling and/or a pumping system for inducing a pressure below atmospheric pressure in the reactor vessel,
a pressure sensor for measuring a pressure in the reactor vessel, and/or a Radon removal apparatus for removing Radon.

15. A system according to any of claims 13 to 14, the system furthermore comprising a controller for controlling the system for performing a method according to any of claims 1 to 12.

## Patentansprüche

1. Ein Verfahren zur Reinigung eines Target-Materials zur Wiederverwendung in der Produktion von Radioisotopen, wobei das Verfahren umfasst
- Erhalten einer Lösung von bestrahltem Target-Material, wobei die Lösung somit mindestens Target-Material und gegebenenfalls auch Radioisotope und gegebenenfalls Verunreinigungen umfasst,
anschließend
- Zugeben einer Säure in einer vorbestimmten Menge und Konzentration und Schaffen von Bedingungen zum quantitativen Lösen des Target-Materials und Vermeiden von Co-Fällung der gegebenenfalls vorhandenen Radioisotope,
- selektives Entfernen von H₂O aus der Lösung durch Verdampfen, was die Säure überwiegend in der Lösung zurücklasst, wodurch es dem Target-Material ermöglicht wird, auszufällen, während die Säurekonzentration in der Lösung ansteigt und wodurch Co-Fällung der gegebenenfalls vorhandenen Radioisotope verringert oder vermieden wird,
- nach dem Entfernen des überschüssigen H₂O, Senken der Temperatur der Lösung, um die Fällung des Target-Materials zu maximieren und die Löslichkeit des Target-Materials in der verbleibenden Flüssigkeit zu verringern,
- Trennen der Flüssigkeit, die die gegebenenfalls vorhandenen Radioisotope enthält, von dem gefällten Target-Material, und
- Aufbereiten des gefällten Target-Materials zur Wiederverwendung in der Produktion von Radioisotopen,
**dadurch gekennzeichnet, dass** das bestrahlte Target-Material Ra-226 und gegebenenfalls Ra-225 und Ac-225 umfasst, und dass die Säure HNO₃ ist.

2. Ein Verfahren nach Anspruch 1, wobei das Erhalten einer Lösung, die bestrahltes Target-Material umfasst, das Erhalten einer bestrahlten Lösung von Target-Material oder das Erhalten einer Lösung von bestrahlten Target-Materialien umfasst, wobei das bestrahlte Target-Material bestrahlt wurde, als es in fester Form vorlag.

3. Ein Verfahren nach einem der vorstehenden Ansprüche, wobei das Erhalten einer Lösung von bestrahltem Target-Material weiter das Erhalten von wässrigen Lösungen oder Feststoffen, z. B. Spülmaterialien, die zum Spülen der Target-Kapsel/des Target-Behälters verwendet wurden, Spülmaterialien, die zum Spülen der Transferschläuche verwendet wurden, Nebenprozessströme, die kleinere Mengen von Target-Materialien und Radioisotopen oder eine Mischung davon in fester oder flüssiger Form enthalten, vor, zusammen mit oder nach dem Transfer des Haupt-Target-Materials umfasst.

4. Ein Verfahren nach einem der vorstehenden Ansprüche, wobei das HNO₃ in einer Konzentration zwischen 65 % und 68 % vorliegt, wenn es dem Reaktorgefäß zugegeben wird.

5. Ein Verfahren nach einem der vorstehenden Ansprüche, wobei einer oder mehrere der Verfahrensschritte bei einem Druck durchgeführt werden, der niedriger ist als Atmosphärendruck.

6. Ein Verfahren nach einem der vorstehenden Ansprüche, wobei das Erhitzen oder Kühlen der Lösung unter Verwendung einer zirkulierenden Flüssigkeit in einer Doppelwand eines doppelwandigen Reaktorgefäßes durchgeführt wird, und/oder das Verfahren in einem geschlossenen Kreislauf angewendet wird, der durch einen Wärmetauscher erhitzt und/oder gekühlt wird.

7. Ein Verfahren nach einem der vorstehenden Ansprüche, wobei das Verfahren das visuelle Verfolgen des Prozesses unter Verwendung eines transparenten Reaktorgefäßes umfasst.

8. Ein Verfahren nach einem der vorstehenden Ansprüche, wobei das Verfahren weiter das Rühren der Lösung, z. B. unter Verwendung von Magnetrühren, umfasst.

9. Ein Verfahren nach einem der vorstehenden Ansprüche, wobei das Verfahren in einem Rotationsverdampfersystem angewendet wird.

10. Ein Verfahren nach einem der vorstehenden Ansprüche, wobei nach dem Entfernen des überschüssigen H₂O die Temperatur unter Raumtemperatur, aber über Gefriertemperatur der Flüssigkeit gesenkt wird.

11. Ein Verfahren nach einem der vorstehenden Ansprüche, wobei die Lösung unter Verwendung eines Tauchfilters gefiltert wird, der mit einem Filtratsammelgefäß und einer Vakuumpumpe oder gegebenenfalls einem Puffergefäß verbunden ist.

12. Ein Verfahren nach einem der vorstehenden Ansprüche, wobei das Aufbereiten des gefällten Target-Materials das Waschen des Niederschlags mit einer Säure nach der anfänglichen Filtration und gegebenenfalls das Wiederholen des Filtrationsprozesses umfasst.

13. Ein System zur Reinigung von Target-Material, wobei das System umfasst
ein Reaktorgefäß,
einen Einlass, der so konfiguriert ist, dass er eine Lösung von bestrahltem Target-Material, das Ra-226 und gegebenenfalls Ra-225 und Ac-225 umfasst, einleitet,
einen Einlass, der so konfiguriert ist, dass er mindestens HNO₃-Säure zugibt,
wobei das Reaktorgefäß Verdampfungsausrüstung zum Entfernen von H₂O aus der Lösung von bestrahltem Target-Material, was die Säure überwiegend in der Lösung zurücklässt, wodurch es dem Target-Material ermöglicht wird, auszufällen, während die Säurekonzentration in der Lösung ansteigt und wodurch Co-Fällung der gegebenenfalls vorhandenen Radioisotope verringert oder vermieden wird, und ein Filtermittel zum Trennen der Flüssigkeit, die die gegebenenfalls vorhandenen Radioisotope enthält, von dem gefällten Target-Material umfasst.

14. Ein System nach Anspruch 13, wobei das System eines oder mehrere umfasst von einem Heiz-/Kühlsystem zum Steuern der Temperatur des Reaktorgefäßes durch Erhitzen und/oder Kühlen und/oder einem Pumpsystem zum Induzieren eines Drucks unter Atmosphärendruck im Reaktorgefäß,
einem Drucksensor zum Messen eines Drucks im Reaktorgefäß, und/oder
einer Radon-Entfernungseinrichtung zum Entfernen von Radon.

15. Ein System nach einem der Ansprüche 13 bis 14, wobei das System weiter eine Steuerung zum Steuern des Systems zum Durchführen eines Verfahrens nach einem der Ansprüche 1 bis 12 umfasst.

## Revendications

1. - Un procédé de purification d'un matériau cible pour réutilisation dans la production de radio-isotopes, le procédé comprenant
- l'obtention d'une solution de matériau cible irradié, la solution comprenant ainsi au moins le matériau cible et éventuellement aussi des radio-isotopes et éventuellement des impuretés,
ensuite,
- l'ajout d'un acide en une quantité et une concentration prédéterminées et la fourniture de conditions pour dissoudre quantitativement le matériau cible et éviter la co-précipitation des radio-isotopes éventuellement présents,
- l'élimination sélective de H₂O de la solution par évaporation, laissant l'acide principalement à l'intérieur de la solution permettant ainsi au matériau cible de précipiter tandis que la concentration d'acide dans la solution augmente et réduisant ainsi ou évitant la co-précipitation des radio-isotopes éventuellement présents,
- après élimination de l'excès de H₂O, abaisser la température de la solution pour maximiser la précipitation du matériau cible et réduire la solubilité du matériau cible dans le liquide restant,
- séparer le liquide contenant les radio-isotopes éventuellement présents du matériau cible précipité, et
- préparer le matériau cible précipité pour réutilisation dans la production de radio-isotopes,
**caractérisé en ce que** le matériau cible irradié comprend Ra-226 et éventuellement Ra-225 et Ac-225 et que l'acide est HNO₃.

2. Un procédé selon la revendication 1, dans lequel l'obtention d'une solution comprenant le matériau cible irradié comprend l'obtention d'une solution irradiée de matériau cible ou l'obtention d'une solution de matériaux cibles irradiés dans lequel le matériau cible irradié a été irradié lorsqu'il était sous forme solide.

3. Un procédé selon l'une quelconque des revendications précédentes, dans lequel l'obtention d'une solution de matériau cible irradié comprend en outre l'obtention de solutions aqueuses ou de solides, par exemple des matériaux de rinçage utilisés pour rincer la capsule/conteneur cible, des matériaux de rinçage utilisés pour rincer les tubes de transfert, des flux de processus secondaires contenant de plus petites quantités de matériaux cibles et de radio-isotopes ou un mélange de ceux-ci, sous forme solide ou liquide, avant, ensemble ou après le transfert du matériau cible principal.

4. Un procédé selon l'une quelconque des revendications précédentes, dans lequel le HNO₃ est présent dans une concentration comprise entre 65 % et 68 % lorsqu'il est ajouté à la cuve du réacteur.

5. Un procédé selon l'une quelconque des revendications précédentes, dans lequel une ou plusieurs des étapes du procédé sont effectuées à une pression inférieure à la pression atmosphérique.

6. Un procédé selon l'une quelconque des revendications précédentes, dans lequel le chauffage ou le refroidissement de la solution est effectué à l'aide d'un liquide circulant dans une double paroi d'une cuve de réacteur à double paroi et/ou le procédé est appliqué dans un circuit fermé qui est chauffé et/ou refroidi par un échangeur de chaleur.

7. Un procédé selon l'une quelconque des revendications précédentes, dans lequel le procédé comprend le suivi visuel du processus à l'aide d'une cuve de réacteur transparente.

8. Un procédé selon l'une quelconque des revendications précédentes, dans lequel le procédé comprend en outre l'agitation de la solution, par exemple à l'aide d'une agitation magnétique.

9. Un procédé selon l'une quelconque des revendications précédentes, dans lequel le procédé est appliqué dans un système d'évaporateur rotatif.

10. Un procédé selon l'une quelconque des revendications précédentes, dans lequel après élimination de l'excès de H₂O, la température est abaissée en dessous de la température ambiante mais au-dessus de la température de congélation du liquide.

11. Un procédé selon l'une quelconque des revendications précédentes, dans lequel la solution est filtrée à l'aide d'un filtre à immersion connecté à un récipient de collecte de filtrat et une pompe à vide ou éventuellement un récipient tampon.

12. Un procédé selon l'une quelconque des revendications précédentes, dans lequel la préparation du matériau cible précipité comprend le lavage du précipité avec un acide après la filtration initiale et éventuellement la répétition du processus de filtration.

13. Un système de purification de matériau cible, le système comprenant
une cuve de réacteur,
une entrée configurée pour introduire une solution de matériau cible irradié comprenant Ra-226 et éventuellement Ra-225 et Ac-225,
une entrée configurée pour ajouter au moins de l'acide HNO₃,
la cuve de réacteur comprenant un équipement d'évaporation pour éliminer H₂O de la solution de matériau cible irradié laissant l'acide principalement à l'intérieur de la solution permettant ainsi au matériau cible de précipiter tandis que la concentration d'acide dans la solution augmente et réduisant ainsi ou évitant la co-précipitation des radio-isotopes éventuellement présents, et
un moyen de filtration pour séparer le liquide contenant les radio-isotopes éventuellement présents du matériau cible précipité.

14. Un système selon la revendication 13, le système comprenant un ou plusieurs des éléments suivants :
un système de chauffage/refroidissement pour contrôler la température de la cuve de réacteur en chauffant et/ou refroidissant et/ou un système de pompage pour induire une pression inférieure à la pression atmosphérique dans la cuve de réacteur,
un capteur de pression pour mesurer une pression dans la cuve de réacteur, et/ou
un appareil d'élimination du radon pour éliminer le radon.

15. Un système selon l'une quelconque des revendications 13 à 14, le système comprenant en outre un contrôleur pour contrôler le système pour effectuer un procédé selon l'une quelconque des revendications 1 à 12.
